# EUROPEAN PATENT APPLICATION

(11) **EP 3 165 376 A1**
(43) Date of publication of application: **10.05.2017**
(21) Application number: 16197244.3
(22) Date of filing: 04.11.2016
(51) Int. Cl.: B41J 29/13, B41J 29/393

(54) **ELECTRONICS DEVICE**

(30) Priority: 04.11.2015 JP 2015216915
(71) Applicant: Funai Electric Co., Ltd., Daito Osaka 574-0013 (JP)
(72) Inventor: TSUKAMOTO, Toshikatsu, Osaka, 574-0013 (JP); FUJIMOTO, Masayuki, Osaka, 574-0013 (JP)
(74) Representative: Behr, Wolfgang

(57) **Abstract**

The present disclosure is intended to ensure correct determination whether the first cover 6 is in an open position or a closed position. An NFC reader 10 has a detection function for detecting a clock signal having a frequency of approximately 13.56 MHz, and a communication function for executing, with a smartphone 11, communication in compliance with an NFC standard. The NFC reader 10 is provided to a first cover 6. A housing 3 is provided with an antenna 28a outputting a transmission clock signal to be detected by the NFC reader 10 with the detection function.

## Description

### BACKGROUND

The present disclosure relates to an electronics device including a housing and a cover attached to the housing to be movable between an open position and a closed position, and detecting the positions of the cover.

Japanese Unexamined Patent Publication No. 2012-158101 discloses a printer including a housing, and a cover attached to the housing to be movable between an open position and a closed position, and detecting the positions of the cover. This printer includes a reciprocable sensor lever having a protrusion for the detection of the positions, and a detector determining a position of the cover in accordance with whether the protrusion of the sensor lever is inserted.

### SUMMARY

An electronics device of the present disclosure includes: a housing; a cover attached to the housing to be movable between an open position and a closed position; a signal outputter which is provided to one of the housing or the cover, and outputs a first signal; a communication unit which is provided to an other one of the housing or the cover, and detects a signal having a predetermined frequency and performs wireless communication with an external device, using the predetermined frequency; and a controller which determines whether the cover is either in the open position or the closed position, based on detection of the first signal by the communication unit.

### BRIEF DESCRIPTION OF THE DRAWINGS

FIG. 1 is a perspective view illustrating a printer of which a cover is in a closed position according to a first embodiment of the present disclosure.
FIG. 2 is a perspective view illustrating the printer of which the cover is in an open position according to the first embodiment of the present disclosure.
FIG. 3 is a schematic perspective view illustrating an inside of the printer according to the first embodiment of the present disclosure.
FIG. 4A is a schematic cross-sectional view of the printer, of which the cover is in the closed position, viewed along arrows A-A in FIG. 1. FIG. 4B corresponds to FIG. 4A with the cover in the open position.
FIG. 5 is a block diagram illustrating a configuration of the printer according to the first embodiment of the present disclosure.
FIG. 6 is a circuit diagram illustrating a configuration of an antenna and constituent features nearby according to the first embodiment of the present disclosure.
FIG. 7 is a flowchart illustrating operation of a controller of the printer according to the first embodiment of the present disclosure.
FIG. 8A is a timing diagram illustrating a detection signal and a transmission clock signal observed during communication with a smartphone. FIG. 8B corresponds to FIG. 8A with the cover in the closed position. FIG. 8C corresponds to FIG. 8A with the cover in the open position.
FIG. 9 corresponds to FIG. 6, and illustrates a modification of the first embodiment.
FIG. 10 for a second embodiment corresponds to FIG. 7.
FIG. 11 for a third embodiment corresponds to FIG. 7.
FIG. 12A for a fourth embodiment corresponds to FIG. 1. FIG. 12B for the fourth embodiment corresponds to FIG. 2.

### DETAILED DESCRIPTION

In the above Japanese Unexamined Patent Publication No. 2012-158101, the detector could be a photointerrupter. However, such a detector cannot distinguish between the detection protrusion and a foreign matter such as dust, and the foreign matter entering the detector might not allow the detector to correctly determine whether the cover is in the open position or the closed position.

The present disclosure is intended to ensure correct determination whether a cover is in the open position or the closed position.

An aspect of the present disclosure is directed to an electronics device. The electronics device includes: a housing; a cover attached to the housing to be movable between an open position and a closed position; a signal outputter which is provided to one of the housing or the cover, and outputs a first signal; a communication unit which is provided to an other one of the housing or the cover, and detects a signal having a predetermined frequency and performs wireless communication with an external device, using the predetermined frequency; and a controller which determines whether the cover is either in the open position or the closed position, based on detection of the first signal by the communication unit.

This aspect allows to determine whether the cover is either in the open position or the closed position depending whether the first signal has been detected. Such a feature contributes to correctly determining whether the cover is in the open position or the closed position even if such a foreign matter as dust is stuck in the vicinity of the controller as far as the foreign matter does not affect the communication. The electronics device of the present disclosure may ensure correct determination whether the cover is in the open position or the closed position.

The frequency of the signal detected by the communication unit is in common with a frequency to be used for wireless communication with an external device, and thus a mechanism for the wireless communication with the external device is also used for detecting the first signal. Such a feature contributes to reducing the number of parts.

In the electronics device of the above aspect, the communication unit may detect the first signal while a distance between the signal outputter and the communication unit is shorter than or equal to a predetermined distance.

In the electronics device of the above aspect, a distance between the signal outputter and the communication unit in the closed position may be shorter than or equal to a predetermined distance.

In the electronics device of the above aspect, the communication unit may output a predetermined detection signal when detecting the first signal, and if the communication unit outputs the predetermined detection signal while the signal outputter does not transmit the first signal, the controller may cause the signal outputter not to output the first signal.

In this aspect, if the communication unit detects the first signal transmitted from the external device, the signal outputter does not output the first signal. Such a feature keeps the communication between the communication unit and the external device from being adversely affected by the first signal to be output from the signal outputter.

In the electronics device of the above aspect, the wireless communication performed by the communication unit may be in compliance with a near-field communication (NFC) standard.

In this aspect, the communication unit has a communication function in compliance with an NFC standard. Such a feature allows a communication mechanism in compliance with the NFC standard to also detect the first signal.

In the electronics device of the above aspect, the predetermined frequency may be approximately 13.56 MHz.

In this aspect, the communication unit performs wireless communication with the external device, using a frequency of approximately 13.56MHz. Thus, the first signal may also be detected by a mechanism for the wireless communication, using the frequency of approximately 13.56MHz.

In the electronics device of the above aspect, the first signal may be detected, by the communication unit, on a mechanism used for the wireless communication with the external device.

In this aspect, the first signal is detected, by the communication unit, also on the mechanism used for the wireless communication with the external device. Such a feature contributes to reducing the number of parts.

In the electronics device of the above aspect, the first signal may have a frequency approximately equal to the predetermined frequency.

In this aspect, the communication unit may detect the first signal easily. Such a feature ensures correct determination that the cover is in the closed position.

In the electronics device of the above aspect, the electronics device may be an image forming apparatus.

This aspect may ensure correct determination whether the cover, to be provided to the image forming apparatus, is in the open position or the closed position.

The electronics device of the above aspect may further include: a printhead which ejects ink; a carriage which is supported to be movable along printing paper, and holds the printhead; and a carriage driver which moves the carriage along the printing paper, wherein the housing may house the carriage, and if determining that the cover is in the open position, the controller may move the carriage to a predetermined position.

In this aspect, the carriage automatically moves to a predetermined position when the user opens the cover. Such a feature frees the user from his or her operation to move the carriage to the predetermined position. Thus, the electronics device is user-friendly.

In the electronics device of the above aspect, the housing may have an opening, the carriage may hold an ink cartridge, the cover may cover, in the closed position, the opening of the housing, and to be opened when the ink cartridge is replaced, and in the predetermined position, the ink cartridge may be replaced via the opening.

In this aspect, the ink cartridge is ready to be replaced when a user simply opens the cover. Such a feature makes the electronics device user-friendly.

The electronics device of the above aspect may further include: a printhead driving circuit which causes the printhead to eject the printhead, wherein if determining that the cover is in the open position in printing operation, the controller may control the printhead driving circuit so that the printhead driving circuit causes the printhead to stop ejecting the ink.

In this aspect, the printhead automatically stops ejecting the ink when the user opens the cover during the printing operation. Such a feature reduces a risk that the user gets the ink. Moreover, the feature frees the user from another operation to cause the printhead to stop ejecting the ink. Thus, the electronics device is user-friendly.

In the electronics device of the above aspect, the signal outputter may output the first signal at a predetermined time interval, and the predetermined time interval may be longer when the controller determines that the cover is in the open position than when the controller determines that the cover is in the closed position.

In this aspect, the signal outputter outputs the first signal at a long time interval if the cover is in the open position. Such a feature contributes to reducing power consumption.

Meanwhile, if the cover is in the closed position, the controller determines at a short time interval whether the cover is in the open position or the closed position. Such a determination reduces a wait time spent until the carriage moves to the predetermined position when the user opens the cover.

In the electronics device of the above aspect, the signal outputter may output the first signal at a predetermined time interval, and the predetermined time interval may be shorter in the printing operation than in the non-printing operation.

In this aspect, the controller determines, in the printing operation at a short time interval, whether the cover is in the open position or the closed position. Such a feature reduces a time period between when the user opens the cover and when the carriage completes the travel to the predetermined position. Hence, the feature may reduce a risk that the user could be injured on his or her hand by contact with the moving carriage. Meanwhile, in the non-printing operation, the first signal is output at a long time interval, contributing to reduction in power consumption.

In the electronics device of the above aspect, the first signal output by the signal outputter may have a frequency closer to the predetermined frequency in the non-printing operation than in the printing operation.

In this aspect, a positional range of the cover in which the communication unit can detect the first signal is larger when the electronics device is in the non-printing operation than in the printing operation. Such a feature reduces the chance that the cover is determined to be in the open position in the non-printing operation, contributing to saving power consumed by unnecessary motion of the carriage to the predetermined position. Meanwhile, the feature increases the chance that the cover is determined to be in the open position in the printing operation, contributing to reducing a wait time spent until the carriage moves to the predetermined position when the user opens the cover.

Described below are embodiments of the present disclosure, with reference to the drawings.

### (First Embodiment)

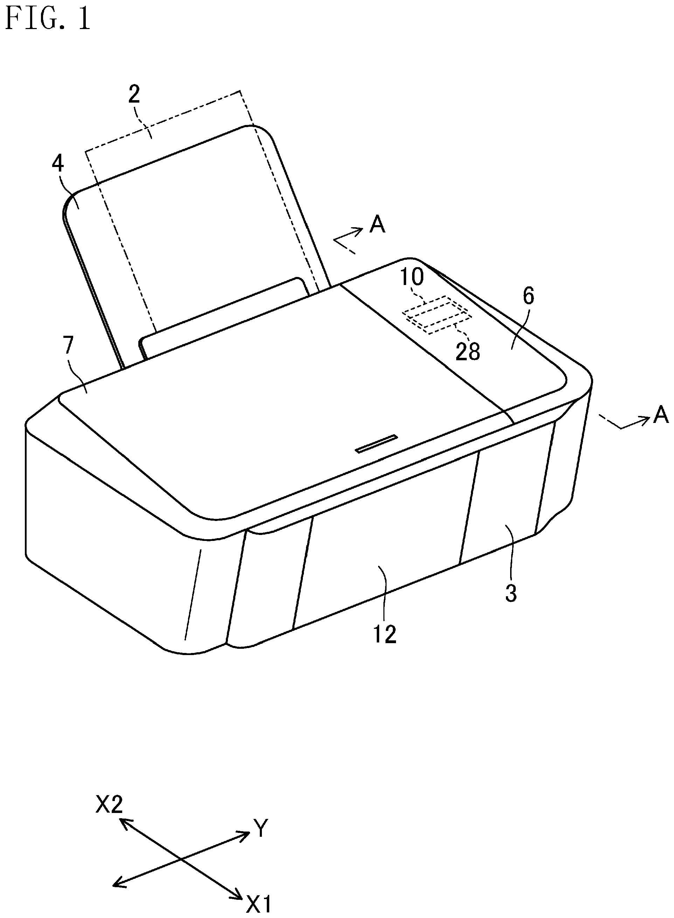

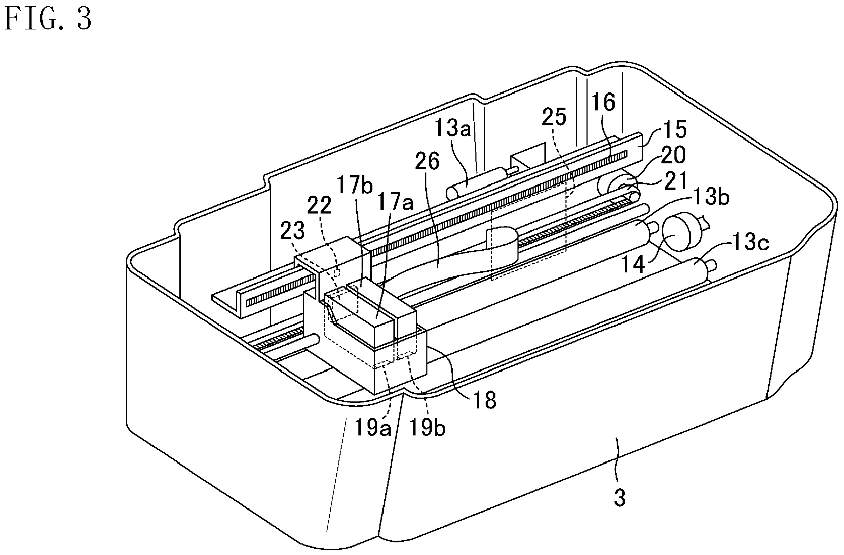

FIGS. 1 to 5 illustrate a printer 1 as an image forming apparatus according to a first embodiment of the present disclosure. This printer 1, also referred to as an inkjet printer, ejects ink onto printing paper 2 to print an image. Note that, in FIG. 1, a direction of an arrow X1 is called a front direction, a direction of an arrow X2 is called a rear direction, and a direction of an arrow Y is called a width direction.

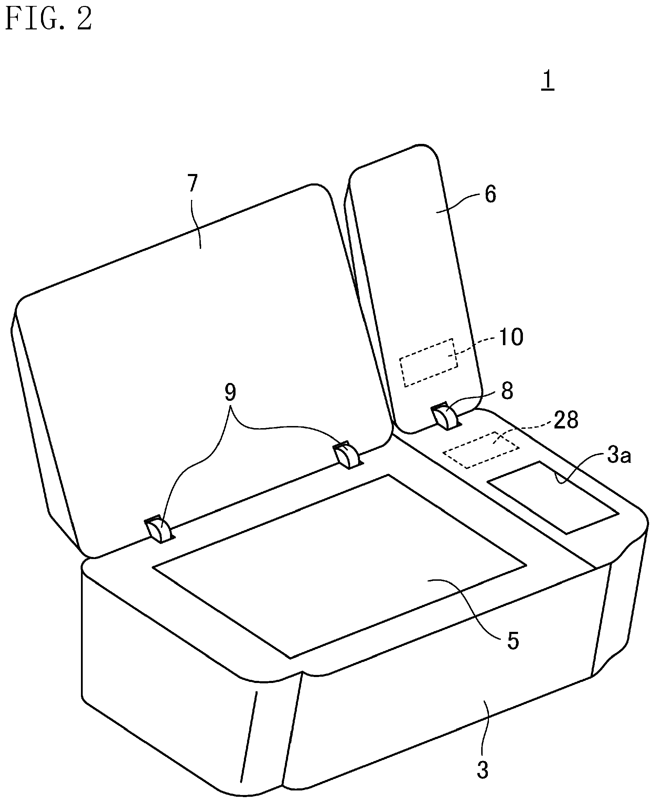

The printer 1 includes: a housing 3 acting as a mounted object substantially shaped into a rectangular box; and a paper feed tray 4 provided to stand backward and obliquely upward from the housing 3. An opening 3a is formed at one end in the width direction (an end in a right of FIG. 2) of a top face of the housing 3. Meanwhile, a glass plate 5 is provided, on the top face of the housing 3, toward another end in the width direction (in a left of FIG. 2) from the opening 3a. The glass plate 5 is shaped into a rectangle, and used for placing an original copy. Moreover, a first cover 6 and a second cover 7 are attached, via a hinge 8 and a hinge 9, respectively, to a rear end of the top face of the housing 3, so as to be vertically movable between an open position and a closed position. In their closed positions, the first cover 6 covers the opening 3a of the housing 3 and the second cover 7 covers the glass plate 5. Furthermore, the housing 3 has a front face provided with a third cover 12 covering a not-shown paper output opening. The third cover 12 is movable between an open position and a closed position.

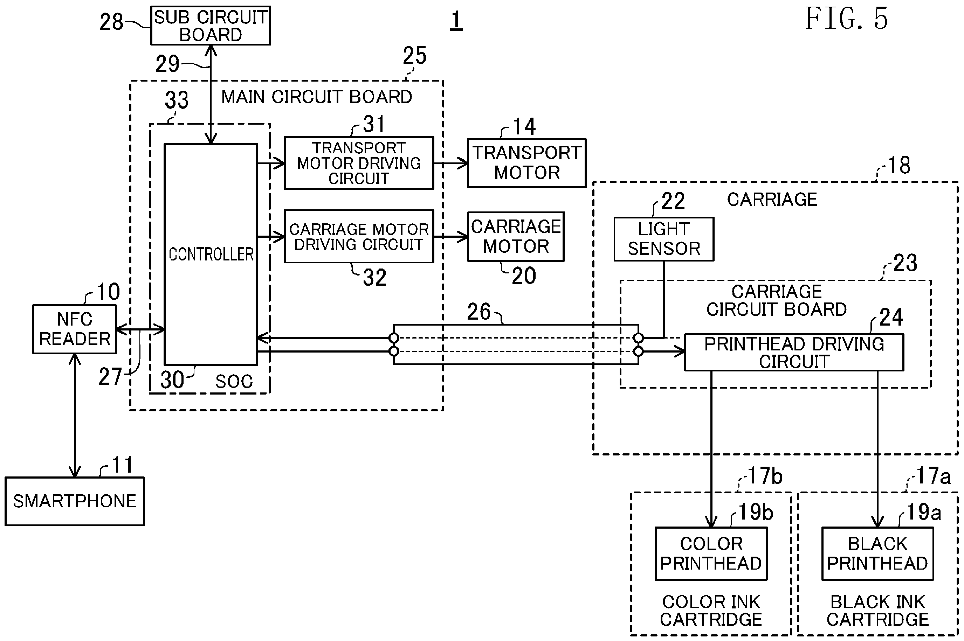

A near-field communication (NFC) reader 10 is embedded, in the first cover 6, slightly toward the hinge 8 from the middle of the first cover 6 in the front-rear direction. The NFC reader 10 acts as a communication unit. The NFC reader 10 has a detection function, a communication function, and a detection signal output function. The detection function involves detecting, via wireless communication, a clock signal having a frequency of approximately 13.56 MHz and acting as a first signal. The communication function involves performing wireless communication, with a smartphone 11 (see FIG. 5) acting as an external device, in compliance with an NFC standard (ISO/IEC 18092). The detection signal output function involves outputting a predetermined detection signal upon the detection of the clock signal with the detection function. The detection function-specifically, detecting the clock signal-is performed also on the communication function-specifically, such mechanisms as a not-shown antenna to be used for the communication with the smartphone 11. Furthermore, during the communication with the NFC reader 10, the smartphone 11 outputs the clock signal detected via the detection function.

Moreover, the NFC reader 10 receives print data and a print instruction via the wireless communication with the smartphone 11.

The housing 3 includes: a paper feed roller 13a, a transport roller 13b, and an output roller 13c for transporting the printing paper 2; and a transport motor 14 for rotating these rollers 13a, 13b, and 13c. Driving force of the transport motor 14 controls the rotation of the paper feed roller 13a, the transport roller 13b, and the output roller 13c via a roller driving mechanism including, for example, not-shown gears. The paper feed roller 13a catches the printing paper 2 placed on the paper feed tray 4, and transports the caught printing paper 2 to the transport roller 13b. The transport roller 13b transports the printing paper 2, transported from the paper feed roller 13a, to the output roller 13c. The output roller 13c further transports the printing paper 2, transported from the transport roller 13b, and outputs the printing paper 2 from the paper output opening (not shown) of the housing 3.

Moreover, a guide rod 15 is attached inside the housing 3. The guide rod 15 extends above the transport roller 13b and the output roller 13c, in parallel with a printing face of the printing paper 2, and perpendicularly to a direction in which the printing paper 2 is transported. This guide rod 15 is provided with an encoder strip 16 having contrasting patterns at a predetermined pitch. Furthermore, this guide rod 15 supports a carriage 18 so that the carriage 18 may move along the guide rod 15. The carriage 18 holds a black ink cartridge 17a and a color ink cartridge 17b in a removable manner. The black ink cartridge 17a stores a black ink for printing an image on the printing paper 2. The color ink cartridge 17b stores color (cyan, magenta, and yellow) inks to print an image on the printing paper 2.

The black ink cartridge 17a is integrally provided with a black printhead 19a ejecting the black ink stored in the black ink cartridge 17a. Meanwhile, the color ink cartridge 17b is integrally provided with a color printhead 19b ejecting the color inks stored in the color ink cartridge 17b. Hence, the black printhead 19a and the color printhead 19b are also held in the carriage 18.

Furthermore, a carriage driving mechanism is attached inside the housing 3 via a carriage motor 20. The carriage driving mechanism includes such constituent elements as a carriage belt 21 which may move back and forth along the guide rod 15. The motion of the carriage 18 is controlled by driving force of the carriage motor 20 via the carriage driving mechanism. Moreover, the carriage 18 has a back face provided with a light sensor 22 and a carriage circuit board 23 moving along with the carriage 18. The light sensor 22 detects light reflected from a contrasting pattern on the encoder strip 16, and, based on a change in the intensity of the reflected light, outputs a carriage travel distance detecting signal in which the number of pulses is in proportion to a travel distance of the carriage 18.

The housing 3 houses a main circuit board 25 in back of the guide rod 15.

From inside the housing 3, a sub circuit board 28 is attached to the rear of the opening 3a on the top face of the housing 3. The attached sub circuit board 28 faces the NFC reader 10 when the first cover 6 is in the closed position.

Described below with reference to FIG. 5 are detailed configurations of the carriage substrate 23, the main circuit board 25, and the sub circuit board 28, as well as their relationships with other constituent elements.

The carriage substrate 23 has a printhead driving circuit 24 mounted thereon. The printhead driving circuit 24 drives the printheads 19a and 19b and causes them to eject the inks, based on a printhead driving signal to be transmitted by a controller 30 of the main circuit board 25.

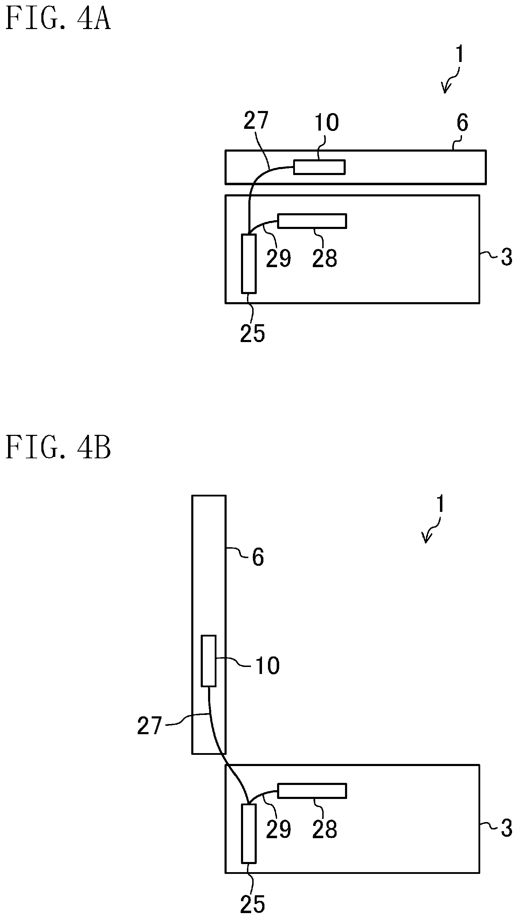

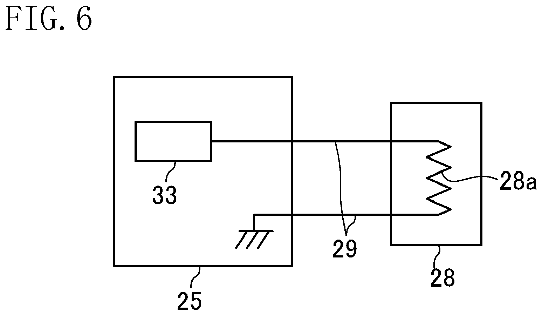

As FIG. 6 shows, the sub circuit board 28 is electrically connected to the main circuit board 25 via a wire 29. The sub circuit board 28 is provided with an antenna 28a acting as a signal outputter. Through wireless communication, the antenna 28a outputs the transmission clock signal as the first signal. Here, the transmission clock signal may be detected by the NFC reader 10 with its detection function. Hence, the transmission clock signal may be detected with the detection function of the NFC reader 10, if the first cover 6 is in the closed position so that the distance between the NFC reader 10 and the antenna 28a is shorter than or equal to a predetermined distance as illustrated in FIG. 4A. Meanwhile, if the first cover 6 is in the open position, the distance between the NFC reader 10 and the antenna 28a is longer than the predetermined distance as illustrated in FIG. 4B. The longer distance reduces strength of a radio wave from the antenna 28a to the NFC reader 10. As a result, the transmission clock signal is undetected with the detection function of the NFC reader 10. The antenna 28a is grounded to the main circuit board 25.

The main circuit board 25 is electrically connected to the carriage substrate 23 via a flexible flat cable (FFC) 26, and, simultaneously, to the NFC reader 10 via a wire 27. The main circuit board 25 has the following constituent elements mounted thereon; namely, the controller 30 including a central processing unit (CPU), a read-only memory (ROM), and a random access memory (RAM) for controlling the operation of the printer 1, a transport motor driving circuit 31, and a carriage motor driving circuit 32. Note that the controller 30 is mounted on a system-on-a-chip (SOC) 33.

The transport motor driving circuit 31 drives the transport motor 14 in accordance with the control of the controller 30. The driven transport motor 14 rotates the paper feed roller 13a, the transport roller 13b, and output roller 13c. The rotation of the rollers 13a, 13b, and 13c transports the printing paper 2.

The carriage motor driving circuit 32 drives the carriage motor 20 in accordance with the control of the controller 30. The carriage motor driving circuit 32, the carriage motor 20, the guide rod 15, and the carriage driving mechanism constitute a carriage driver which moves the carriage 18 along the printing paper 2.

The controller 30 generates a transmission clock signal having a frequency of approximately 13.56 MHz, and transmits the generated transmission clock signal to the antenna 28a on the sub circuit board 28.

Moreover, the controller 30 transmits the printhead driving signal, for ejecting the inks from the printheads 19a and 19b, to the printheads 19a and 19b via the FFC 26, and simultaneously, receives the carriage travel distance detecting signal from the light sensor 22. Based on the received carriage travel distance detecting signal, the controller 30 determines, for example, a position and a traveling direction of the carriage 18.

Furthermore, based on the print data and the print instruction received by the NFC reader 10, the controller 30 controls the constituent elements so that an image is printed on the printing paper 2.

Moreover, the controller 30 receives via the wire 27 the detection signal output by the NFC reader 10. Based on the received detection signal, the controller 30 controls the transmission of the transmission clock signal, and determines whether the first cover 6 is in the open position or the closed position. If determining that the first cover 6 is in the open position, the controller 30 causes the carriage motor driving circuit 32 to move the carriage 18 to a predetermined position. In the predetermined position, the carriage 18 faces the first cover 6 in the closed position so that both of the ink cartridges 17a and 17b may be replaced via the opening 3a. If determining that the first cover 6 is in the open position during printing operation, the controller 30 causes the printhead driving circuit 24 to stop the printing operation. Thus, the printhead driving circuit 24 causes the printheads 19a and 19b to stop ejecting the inks.

Moreover, when the first cover 6 of the printer 1 is opened, the ink cartridges 17a and 17b, housed in the housing 3, may be replaced. While the power of the printer 1 is on, the controller 30 of the printer 1 determines whether the first cover 6 is in the open position or the closed position at a predetermined time interval. When the first cover 6 of the printer 1 is opened, the controller 30 moves the carriage 18, housed in the housing 3, to the predetermined position so that the ink cartridges 17a and 17b may be replaced. Here, if the printer 1 is in printing operation, the controller 30 stops the printing operation.

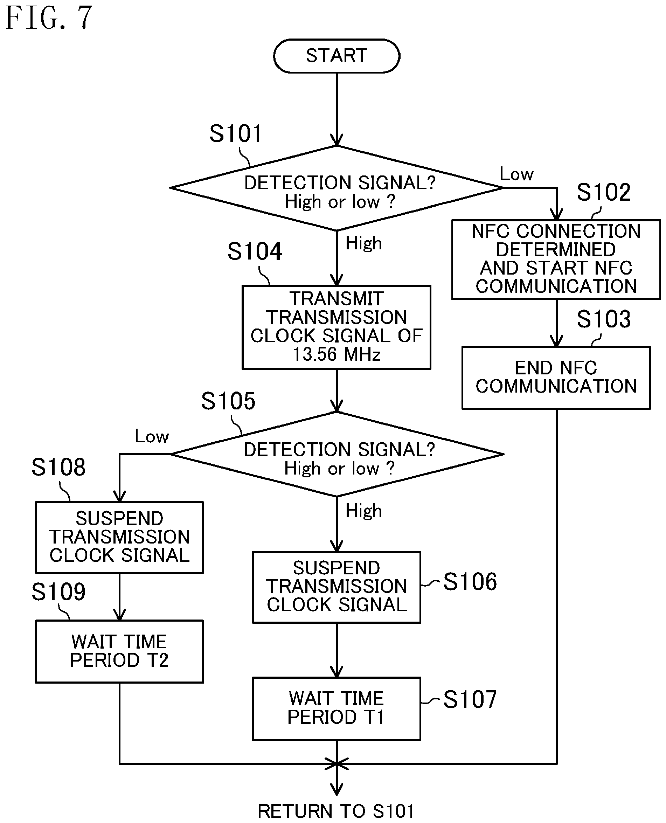

FIG. 7 illustrates operation of the controller 30 determining whether the first cover 6 is in the open position or the closed position.

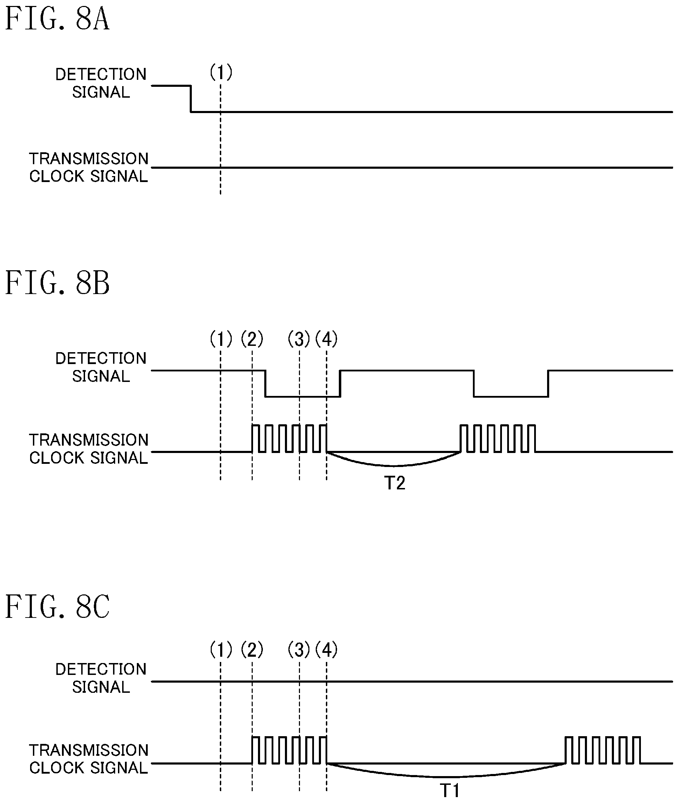

First, in S101, the controller 30 determines, at a time point indicated by (1) in FIGS. 8A to 8C, whether the NFC reader 10 outputs a detection signal (i.e. whether the detection signal is low) while the transmission of a transmission clock signal is suspended. If the detection signal is output (i.e. if the detection signal is low) as illustrated in FIG. 8A, the operation proceeds to processing in S102. Meanwhile, if the detection signal is not output (i.e. if the detection signal is high) as illustrated in FIGS. 8B and 8C, the operation proceeds to processing in S104.

In S102, the controller 30 determines that the NFC reader 10 is to communicate (NFC) with the smartphone 11, and causes the NFC reader 10 to start a communication with the smartphone 11. Here, the controller 30 does not transmit the transmission clock signal to the antenna 28a, nor does the antenna 28a output the transmission clock signal.

In S103, the controller 30 waits until the communication ends between the NFC reader 10 and the smartphone 11. When receiving, from the NFC reader 10, a high detection signal indicating the end of the communication, the operation returns to the processing in S101.

In S104, the controller 30 transmits, to the antenna 28a, a transmission clock signal of approximately 13.56 MHz at a time point indicated by (2) in FIGS. 8B and 8C. Thus, the transmission clock signal is output from the antenna 28a.

In S105, the controller 30 determines, at a time point indicated by (3) in FIGS. 8B and 8C, whether the detection signal is output by the NFC reader 10 (i.e. whether the detection signal is low). If the detection signal is not output as illustrated in FIG. 8C, the controller 30 determines that the first cover 6 is in the open position. Then, the controller 30 causes the printhead driving circuit 24 to suspend the printing operation; that is, to suspend the ejection of the inks by the printheads 19a and 19b, and the carriage motor driving circuit 32 to move the carriage 18 to the predetermined position. The operation proceeds to processing in S106. Meanwhile, if the detection signal is output as illustrated in FIG. 8B, the controller 30 determines that the first cover 6 is in the closed position. The operation proceeds to processing in S108.

In S106, the controller 30 suspends transmitting the transmission clock signal at a time point indicated by (4) in FIG. 8C.

In S107, the controller 30 waits until a predetermined time period T1 elapses. Then, the operation returns to the processing in S101.

In S108, the controller 30 suspends transmitting the transmission clock signal at a time point indicated by (4) in FIG. 8B.

In S109, the controller 30 waits until a time period T2 elapses, the time period T2 being shorter than the predetermined time period T1. Then, the operation returns to the processing in S101.

While the power of the printer 1 is on, the controller 30 repeats the processing of S101 to S109. If the first cover 6 is in the open position, the transmission clock signal is transmitted at a long time interval, reducing power consumption. Meanwhile, if the first cover 6 is in the closed position, the controller 30 determines at a short time interval whether the first cover 6 is in the open position or the closed position. When a user opens the first cover 6, such a determination reduces a wait time spent until the carriage 18 moves to the predetermined position.

Hence, the first embodiment involves determining whether the first cover 6 is in the open position or the closed position, depending whether the transmission clock signal, to be output via the wireless communication, has been detected. Such a feature contributes to correctly determining whether the first cover 6 is in the open position or the closed position even if such a foreign matter as dust is stuck in between the housing 3 and the first cover 6 as far as the foreign matter does not affect the wireless communication. Thus, the first embodiment may ensure correct determination whether the first cover 6 is in the open position or the closed position.

A communication mechanism in compliance with an NFC standard for the smartphone 11 is also used for detecting the clock signal by the NFC reader 10. Such a feature contributes to reducing the number of parts.

When the NFC reader 10 communicates with the smartphone 11, the antenna 28a does not start outputting the transmission clock signal. Such a feature keeps the communication between the NFC reader 10 and the smartphone 11 from being adversely affected by the transmission clock signal to be output from the antenna 28a.

When the user opens the first cover 6, the carriage 18 automatically moves to the predetermined position. Such a feature frees the user from his or her operation to move the carriage 18 to the predetermined position. Thus, the printer 1 is user-friendly.

### (Modification of First Embodiment)

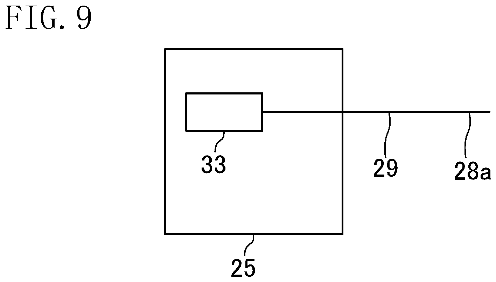

FIG. 9 illustrates a configuration of the antenna 28a and constituent features nearby according to a modification of the first embodiment of the present disclosure. In this Modification, the antenna 28a is not grounded, nor is the sub circuit board 28 provided.

Other configurations and operation are the same as those in the first embodiment, and the same configuration has the same reference character. Thus, detailed description thereof shall be omitted.

### (Second Embodiment)

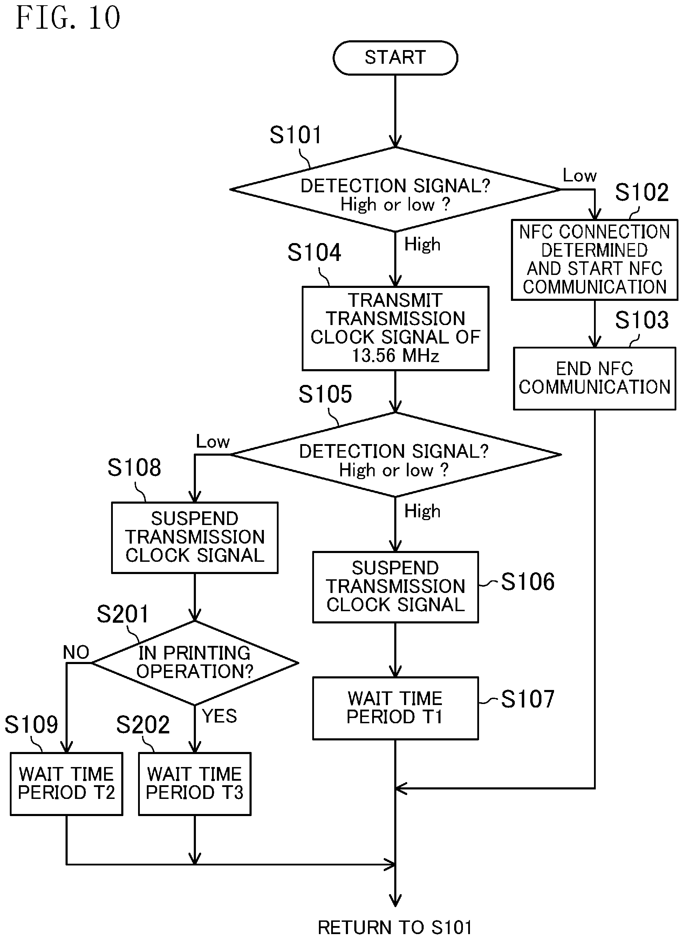

FIG. 10 illustrates operation of the controller 30 of the printer 1 according to a second embodiment of the present disclosure. The operation involves determining whether the first cover 6 is in the open position or the closed position. If determining in the second embodiment that the first cover 6 is in the closed position, the controller 30 determines in S201, after the processing in S108, whether the printer 1 is in the printing operation. If the printer 1 is in the printing operation, the operation proceeds to S202. If the printer 1 is in the non-printing operation, the operation proceeds to S109. In S202, the controller 30 waits until a time period T3 elapses, the time period T3 being shorter than the time period T2. Then, the operation returns to S101.

Other configurations and operation are the same as those in the first embodiment, and the same configuration has the same reference character. Thus, detailed description thereof shall be omitted.

This second embodiment involves determining, in the printing operation at a short time interval, whether the first cover 6 is in the open position or the closed position, contributing to reduction in a time period between when the user opens the first cover 6 and when the carriage 18 completes the travel to the predetermined position. Such a feature may reduce a risk that a user could be injured on his or her hand by contact with the moving carriage 18. Meanwhile, in non-printing operation, the second embodiment involves outputting a transmission clock signal at a long time interval, contributing to reduction in power consumption.

### (Third Embodiment)

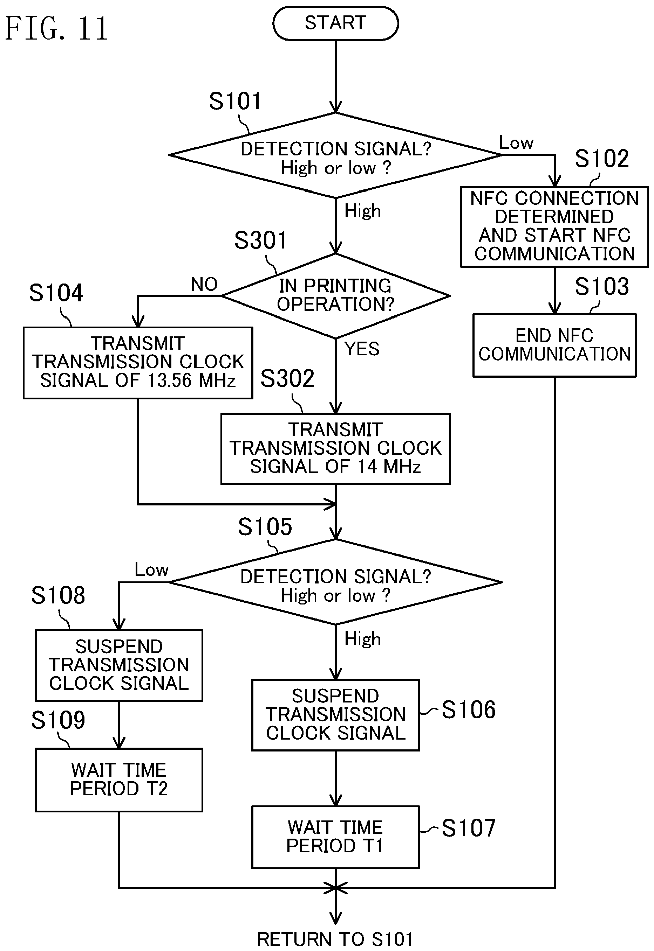

FIG. 11 illustrates operation of the controller 30 of the printer 1 according to a third embodiment of the present disclosure. The operation involves determining whether the first cover 6 is in the open position or the closed position. The controller 30 in the third embodiment determines in S301 if the printer 1 is in the printing operation after determining in S101 that the detection signal is not output (i.e. the detection signal is high). If the printer 1 is in the printing operation, the operation proceeds to S302. If the printer 1 is in the non-printing operation, the operation proceeds to S104. In S302, the controller 30 transmits a transmission clock signal of 14 MHz to the antenna 28a. Then, the operation proceeds to S105.

Other configurations and operation are the same as those in the first embodiment, and the same configuration has the same reference character. Thus, detailed description thereof shall be omitted.

Hence, in the third embodiment, the frequency of the transmission clock signal to be output in the non-printing operation by the antenna 28a is closer to 13.56 MHz than that to be output in the printing operation. Accordingly, a positional range of the first cover 6 in which the NFC reader 10 can detect the transmission clock signal is larger when the printer 1 is in the non-printing operation than in the printing operation. Such a feature reduces the chance that the first cover 6 is determined to be in the open position in the non-printing operation, contributing to saving power consumed by unnecessary motion of the carriage 18 to the predetermined position. Meanwhile, the feature increases the chance that the first cover 6 is determined to be in the open position in the printing operation, contributing to reducing a wait time spent until the carriage 18 moves to the predetermined position since a user opens the first cover 6.

### (Fourth Embodiment)

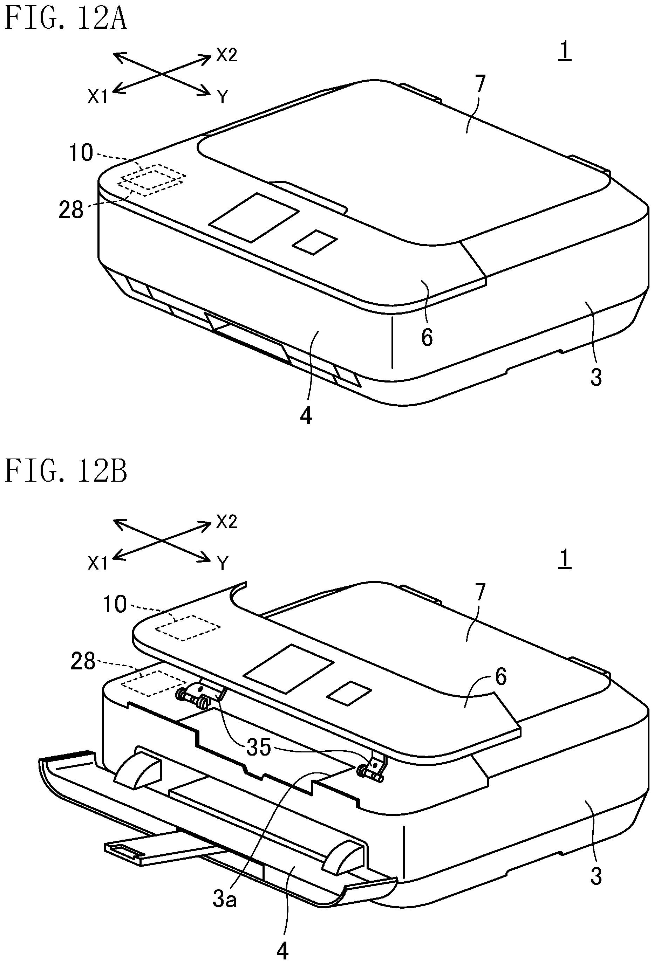

FIGS. 12A and 12B illustrate the printer 1 according to a fourth embodiment of the present disclosure. The paper feed tray 4 in this fourth embodiment is retractable to stand forward and obliquely upward from the housing 3. Moreover, the opening 3a is formed at a front end on the top face of the housing 3, and the glass plate 5 (not shown in FIGS. 12A and 12B) is provided on the top face, of the housing 3, behind the opening 3a. The first cover 6 is attached to be movable between an open position and a closed position while maintaining a certain orientation by a four-joint horizontal mechanical linkage 35.

Other configurations and operation are the same as those in the first embodiment, and the same configuration has the same reference character. Thus, detailed description thereof shall be omitted.

In the first to fourth embodiments and the modification, the NFC reader 10 is provided to the first cover 6 and the antenna 28a is provided to the housing 3. In contrast, the antenna 28a may be provided to the first cover 6, and the NFC reader 10 may be provided to the housing 3.

In the first to fourth embodiments and the modification, the NFC reader 10 and the main circuit board 25 are connected to each other via the wire 27. Instead, the NFC reader 10 and the main circuit board 25 may be connected via an FFC. Similarly, the main circuit board 25 and the sub circuit board 28 may be connected to each other by an FFC.

In the first to fourth embodiments and the modification, the antenna 28a is provided out of the main circuit board 25. Instead, the main circuit board 25 may be provided to face the NFC reader 10 when the first cover 6 is in the closed position, and the antenna 28a may be mounted on the main circuit board 25.

In the first to fourth embodiments and the modification, the communication function of the NFC reader 10 is in compliance with an NFC standard (ISO/IEC 18092). Instead, the communication function may perform wireless communication in compliance with other standards such as radio-frequency identification (RFID). Moreover, the wireless communication is not limited to be performed with the frequency of approximately 13.56 MHz. For example, the wireless communication may be in compliance with a standard of Bluetooth (trademark), and performed with a frequency of 2.4 MHz and 5 GHz other than the approximately 13.56 MHz.

In the first to fourth embodiments and the modification, the external device is a smartphone. Instead, the external device may be any given device such as a digital camera, as far as the device is capable of wireless communication.

In the first to fourth embodiments and the modification, the present disclosure is applied to the determination of a position of the first cover 6 of the printer 1 between the open position and the closed position. The present disclosure may also be applied to the determination of a position of the second cover 7 and the third cover 12 between the open position and the closed position. Furthermore, the present disclosure may be applied to the determination of the position of a cover for other electronics devices including a door of a refrigerator, a cover of a rice cooker, and a foldable cellular phone.

In the first to fourth embodiments and the modification, the present disclosure is applied to the first cover 6 to be opened when ink cartridges 17a and 17b are replaced. The present disclosure may also be applied to a cover to be opened when a user clears a paper jam caused by the printing paper 2. In this case, the controller 30 moves the carriage 18 to a predetermined position when determining that the cover is in the open position, so that the user is less likely to touch the carriage 18. Such a feature contributes to ensure safety of the user removing the printing paper 2.

In the first, second, and fourth embodiments and the modification, the frequency of the transmission clock signal is the same as that to be used for the communication function of the NFC reader 10. However, the frequency may be different as far as the frequency may be detected by the detection function of the NFC reader 10.

In the third embodiment, the transmission clock signal has a frequency of approximately 13.56 MHz in the non-printing operation, and of 14 MHz in the printing operation. However, other frequencies may be used as far as the frequency in the non-printing operation is closer to a frequency to be used for the communication function of the NFC reader 10 than the frequency in the printing operation is.

In the first to fourth embodiment, the controller 30 is mounted on the SOC 33. Instead, the controller 30 may be mounted on a chip other than the SOC 33.

## Claims

1. An electronics device comprising:
a housing;
a cover attached to the housing to be movable between an open position and a closed position;
a signal outputter provided to one of the housing or the cover, and configured to output a first signal;
a communication unit provided to an other one of the housing or the cover, and configured to detect a signal having a predetermined frequency and perform wireless communication with an external device, using the predetermined frequency; and
a controller configured to determine whether the cover is either in the open position or the closed position, based on detection of the first signal by the communication unit.

2. The electronics device of claim 1, wherein
the communication unit detects the first signal while a distance between the signal outputter and the communication unit is shorter than or equal to a predetermined distance.

3. The electronics device of claim 2, wherein
a distance between the signal outputter and the communication unit in the closed position is shorter than or equal to a predetermined distance.

4. The electronics device of one of claim 1 to claim 3, wherein
the communication unit is configured to output a predetermined detection signal when detecting the first signal, and
if the communication unit outputs the predetermined detection signal while the signal outputter does not transmit the first signal, the controller is configured to cause the signal outputter not to output the first signal.

5. The electronics device of any one of claim 1 to claim 4, wherein
the wireless communication performed by the communication unit is in compliance with a near-field communication (NFC) standard.

6. The electronics device of claim 5, wherein
the predetermined frequency is approximately 13.56 MHz.

7. The electronics device of any one of claim 1 to claim 6, wherein
the first signal is detected, by the communication unit, on a mechanism used for the wireless communication with the external device.

8. The electronics device of any one of claim 1 to claim 7, wherein the first signal has a frequency approximately equal to the predetermined frequency.

9. The electronics device of any one of claim 1 to claim 8, wherein the electronics device is an image forming apparatus.

10. The electronics device of claim 9, further comprising:
a printhead configured to eject ink;
a carriage supported to be movable along printing paper, and configured to hold the printhead; and
a carriage driver configured to move the carriage along the printing paper, wherein
the housing is configured to house the carriage, and
if determining that the cover is in the open position, the controller is configured to move the carriage to a predetermined position.

11. The electronics device of claim 10, wherein
the housing has an opening,
the carriage is configured to hold an ink cartridge,
the cover is configured to cover, in the closed position, the opening of the housing, and to be opened when the ink cartridge is replaced, and
in the predetermined position, the ink cartridge is replaced via the opening.

12. The electronics device of claim 11, further comprising
a printhead driving circuit configured to cause the printhead to eject the printhead, wherein
if determining that the cover is in the open position in printing operation, the controller is configured to control the printhead driving circuit so that the printhead driving circuit causes the printhead to stop ejecting the ink.

13. The electronics device of any one of claim 10 to claim 12, wherein
the signal outputter is configured to output the first signal at a predetermined time interval, and
the predetermined time interval is longer when the controller determines that the cover is in the open position than when the controller determines that the cover is in the closed position.

14. The electronics device of any one of claim 10 to claim 12, wherein
the signal outputter is configured to output the first signal at a predetermined time interval, and
the predetermined time interval is shorter in the printing operation than in non-printing operation.

15. The electronics device of any one of claim 10 to claim 12, wherein
the first signal output by the signal outputter has a frequency closer to the predetermined frequency in the non-printing operation than in the printing operation.
